# EUROPEAN PATENT APPLICATION

(11) **EP 1 739 587 A1**
(43) Date of publication of application: **03.01.2007**
(21) Application number: 05019776.3
(22) Date of filing: 12.09.2005
(51) Int. Cl.: G06F 21/00, G06F 12/14

(54) **Portable electronic apparatus and secured data output method therefor**

(30) Priority: 23.06.2005 JP 2005183465
(71) Applicant: KABUSHIKI KAISHA TOSHIBA, Tokyo 105-8001 (JP)
(72) Inventor: Yanagida, Masaru, Minato-ku Tokyo 105 8001 (JP); Ejiri, Masahito, Minato-ku Tokyo 105 8001 (JP)
(74) Representative: Kramer - Barske - Schmidtchen

(57) **Abstract**

In an IC card (2), the value of a monitoring flag is set to an initial value which serves as a predetermined value when all processes corresponding to commands for outputting data are normally performed, in a memory of an IC chip (2a). The value of the monitoring flag is set depending on the execution states of the various processes corresponding to the commands for outputting the data. When the processes prior to data output are completed, data to be output is masked on the basis of the value of the monitoring flag, and the masked data is output using a communication interface (21).

## Description

The present invention relates to a portable electronic apparatus such as an IC card including a communication interface with an external device, a memory storing data, a CPU for executing a processing program, and the like, and a data output method for the portable electronic apparatus.

Conventionally, in an IC card serving as a portable electronic apparatus, data stored in a memory is output in response to a read command issued from an external device for reading out the data. In the conventional IC card, upon reception of the read command from the external device, various processes required to output the data are performed. At this time, in the IC card, a monitoring flag monitors the execution states of the various processes required to output the data. Therefore, in the IC card, the monitoring flag is checked prior to actual data output. When it is determined that the monitoring flag is normal as a result of the checking process, the data is output from the IC card. As described above, in the conventional IC card, processing contents are monitored using the monitoring flag. Accordingly, in the conventional IC card, the data is inhibited from being output fraudulently.

However, a malicious person (fraudulent accessing person) who is going to steal data from the above-described IC card tries to decrypt (read out) data in the IC card by various attacks on the IC card. For example, the fraudulent accessing person sometimes makes a program malfunction by adding external noise to the IC card. In this case, in the IC card, the checking function of the monitoring flag in the above-described process can be invalidated, and the data can be output from the IC card. That is, in the conventional IC card, when the person intentionally makes the program malfunction by adding the external noise or the like, the internal data can be output, thus posing a problem.

It is an object of the present invention to provide a portable electronic apparatus which can improve security by protecting data to be output to an external device to have high security, and a control method for the portable electronic apparatus.

According to an aspect of the present invention, a portable electronic apparatus comprises a setting unit which sets an initial value of monitoring information which serves as a predetermined value in a state in which all processes corresponding to a command are performed when the command for outputting data is supplied from an external device, a changing unit which changes the monitoring information whose initial value is set by the setting unit depending on the performed processes, a protection unit which protects data to be output, on the basis of the monitoring information changed by the changing unit depending on the performed processes, and an output unit which outputs the data protected by the projection unit to the external device.

According to another aspect of the present invention, a data output method for a portable electronic apparatus comprises setting an initial value of monitoring information which serves as a predetermined value in a state in which all processes corresponding to a command are performed when the command for outputting data is supplied from an external device, changing the monitoring information whose initial value depending on the performed processes, protecting data to be output is set on the basis of the monitoring information changed depending on the performed processes, and outputting the protected data to the external device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram schematically showing an arrangement example of an IC card serving as a portable electronic apparatus, and an IC card processing device serving as an external device which communicates with the IC card according to an embodiment of the present invention;
FIG. 2 is a block diagram showing an arrangement example of the IC card;
FIG. 3 is a flowchart for explaining a process when a read command for reading out data is received;
FIG. 4 is a flowchart for explaining a process when the read command for reading out the data is received;
FIG. 5 is a flowchart for explaining a modification of the process shown in FIGS. 3 and 4; and
FIG. 6 is a flowchart for explaining a modification of the process shown in FIGS. 3 and 4.

An embodiment of the present invention will be described in detail below with reference to accompanying drawing.

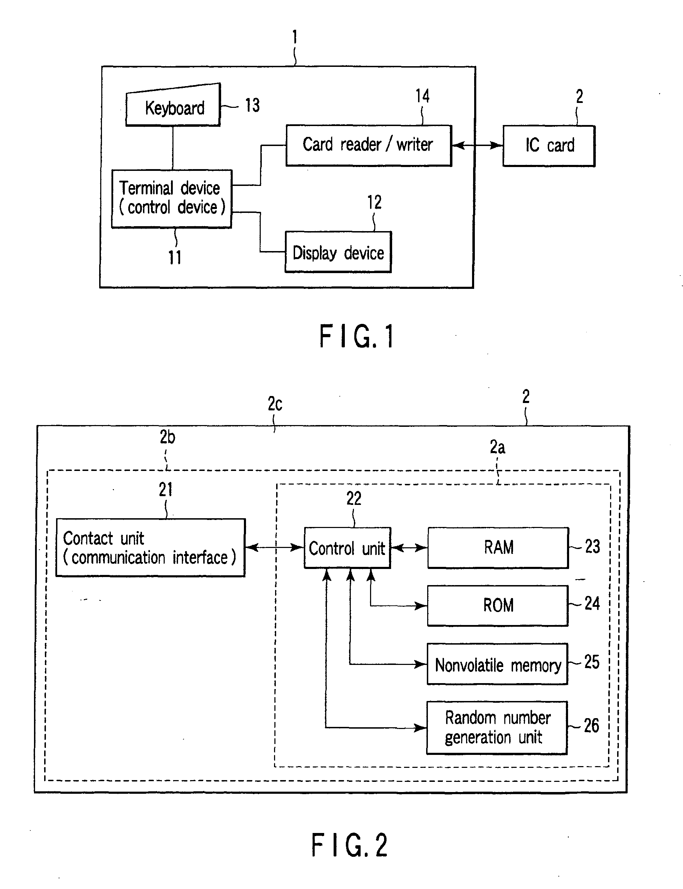

FIG. 1 is a block diagram schematically showing an arrangement example of a terminal system (IC card processing device) 1 serving as an external device having a communication function with an IC card 2 serving as a portable electronic apparatus according to the embodiment of the present invention.

As shown in FIG. 1, the terminal system 1 includes a terminal device 11, display device 12, keyboard 13, card reader/writer 14, and the like.

The terminal device 11 controls the operation of the overall terminal system 1. The terminal device 11 includes a CPU, various memories, various interfaces, and the like. For example, the terminal device 11 has a function of transmitting a command for processing the IC card 2 via the card reader/writer 14, and a function of performing various processes on the basis of the data received from the IC card 2.

For example, the terminal device 11 transmits a write command for writing the data on the IC card 2 via the card reader/writer 14. Upon reception of this write command, the IC card 2 writes the data in the memory of the IC card 2. The terminal device 11 also transmits via the card reader/writer 14 a read command for reading out the data from the IC card 2. Upon reception of this read command, the data stored in the memory of the IC card 2 is read out, and the readout data is transmitted to the terminal device 11.

The display device 12 is a display device which displays various kinds of information under the control of the terminal device 11. The keyboard 13 is an operation unit operated by an operator of the terminal system 1. The operator inputs various operation instructions and data using the keyboard 13. The card reader/writer 14 is an interface device for communicating with the IC card 2. Power supply, clock supply, reset control, data transmission/reception, and the like are possible for the IC card 2 via the card reader/writer 14. That is, the card reader/writer 14 activates the IC card 2 under the control of the terminal device 11. The card reader/writer 14 transmits various commands to the activated IC card 2, and receives responses to the transmitted commands.

Upon reception of power supply from a high-order device such as the IC card processing device 1, the IC card 2 is activated (becomes operable). For example, when the IC card 2 communicates with the terminal system 1 by a contact communication scheme, i.e., when the IC card 2 is a contact IC card, the IC card 2 is activated by receiving an operating power supply voltage and an operating clock from the IC card processing device 1 via a contact unit 21 serving as a communication interface.

When the IC card 2 communicates with the terminal system 1 using a noncontact communication scheme, i.e., when the IC card 2 is a noncontact IC card, the contact unit 21 of the IC card 2 includes an antenna, communication control unit, and the like serving as the communication interfaces. In this case, the IC card 2 receives a radio wave from the IC card processing device 1 via the antenna, communication control unit, and the like included in the contact unit 21 serving as the communication interface. The IC card 2 generates the operating power supply voltage and the operating clock from the received radio wave using a power supply unit (not shown), and is activated.

The arrangement example of the IC card 2 will be described below.

FIG. 2 is a block diagram schematically showing the internal arrangement example of the IC card 2. As shown in FIG. 2, the IC card 2 includes the contact unit (communication interface) 21, a control unit 22, a RAM 23, a ROM 24, a nonvolatile memory 25, and the like. For example, the control unit 22, RAM 23, ROM 24, and nonvolatile memory 25 are included in an IC chip 2a. Furthermore, the IC chip 2a and the communication interface 21 are integrated as a module 2b. The module 2b is buried in a housing 2c of the IC card 2.

The contact unit 21 functions as the communication interface with the card reader/writer 14 of the terminal system 1. When the IC card 2 is implemented as the contact IC card, the contact unit 21 functions as an interface for transmitting/receiving a signal in contact with the card reader/writer 14 of the terminal system 1. When the IC card 2 is implemented as the noncontact IC card, the contact unit 21 functions as an interface for transmitting/receiving the radio wave to/from the card reader/writer 14 of the terminal system 1.

The control unit 22 controls the operation of the overall IC card 2. The control unit 22 operates on the basis of a processing program stored in the ROM 24 or nonvolatile memory 25. The RAM 23 is a volatile memory which functions as a working memory. The RAM 23 functions as a buffer which temporarily saves, e.g., the data which is currently processed by the control unit 22. For example, the RAM 23 temporarily saves the data received from the IC card processing device 1 via the contact unit 21.

The ROM 24 is a nonvolatile memory in which the control program and the control data are stored in advance. The ROM 24 is incorporated in the IC card 2 in its manufacturing stage. The control program stored in the ROM 24 is preinstalled in accordance with the specifications of the IC card 2.

The nonvolatile memory 25 is a nonvolatile memory such as an EEPROM or flash ROM capable of writing/rewriting data. In the nonvolatile memory 25, a program file and a data file are defined in accordance with an application purpose of the IC card 2, and data are written in the defined files. Additionally, in the nonvolatile memory 25, authentication information for authenticating the IC card, or data unique to the IC card is stored. A random number generation unit 26 generates random number data.

The process in the IC card 2 with the above arrangement will be described below.

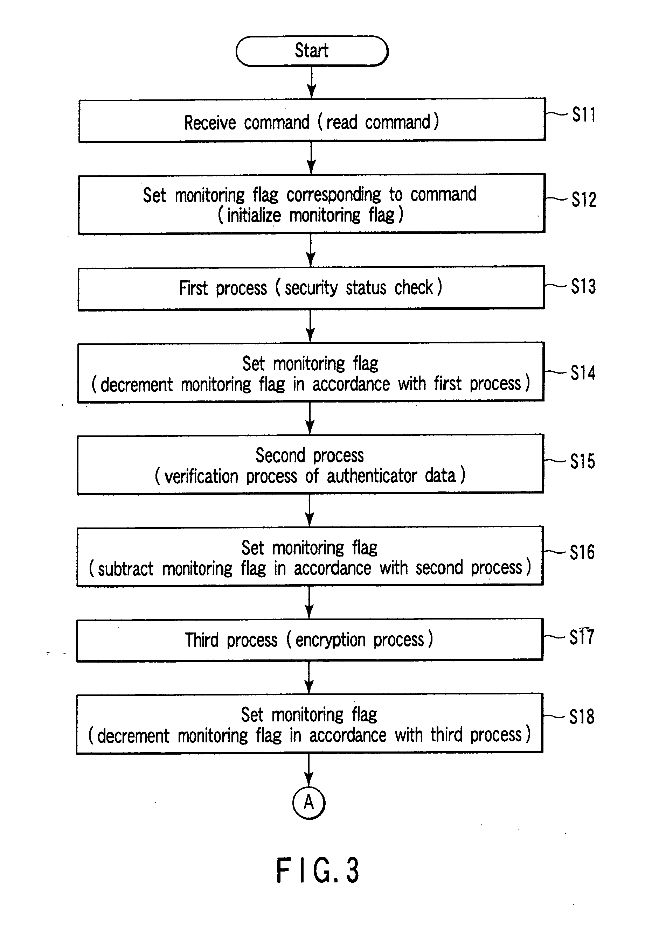

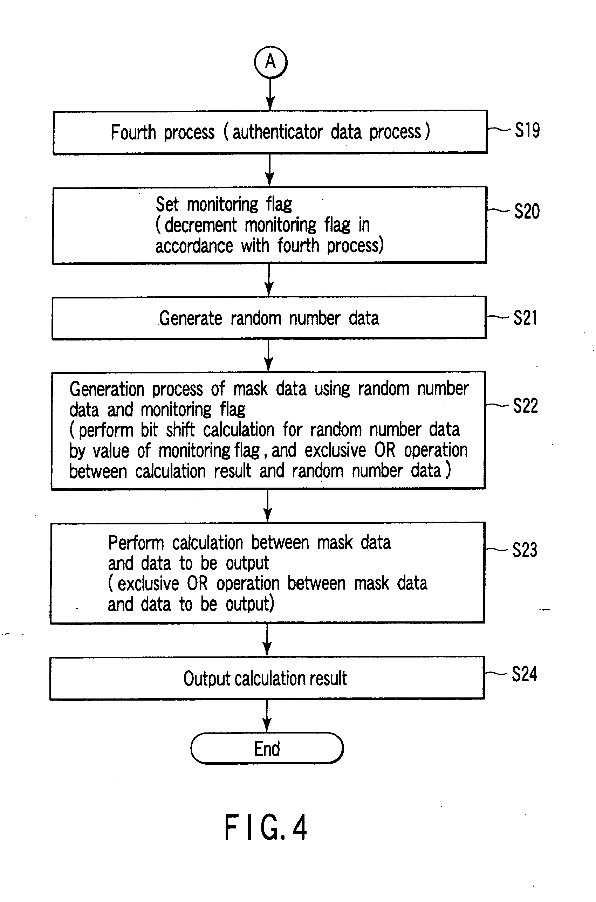

FIGS. 3 and 4 are flowcharts for explaining a process example in the IC card 2.

First, the terminal system 1 outputs to the IC card 2 via the card reader/writer 14 a read command for reading out data. On the other hand, the IC card 2 receives the read command from the terminal system 1 via the contact unit 21 (step S11). Upon reception of the read command from the terminal system 1, the control unit 22 of the IC card 2 sets (initializes) a monitoring flag (monitoring information) in response to the received command (step S12).

The monitoring flag is information for monitoring the execution states of the processes corresponding to the received command. That is, the monitoring flag is information for identifying whether the various processes corresponding to the command have reliably been performed. The monitoring flag is set in the memory of the IC card 2. For example, the monitoring flag may be stored in the internal memory (not shown) of the control unit 22, RAM 23, or nonvolatile memory 25.

When this monitoring flag is initialized, the control unit 22 of the IC card 2 sequentially performs the various processes in accordance with the received command, and sets the monitoring flag (i.e., changes the value of the monitoring flag) at a predetermined timing in accordance with the execution results of these processes (steps S13 to S20). That is, when the processes according to the received read command are normally performed, the control unit 22 changes the value of the monitoring flag as a process of setting the monitoring flag.

The value (initial value) of the monitoring flag is so set as to be a predetermined value ("0") when the various processes prior to data output (immediately before data output) are completed. In the IC card 2, the various processes (processing contents) to be performed are determined in accordance with the received command. Hence, a predetermined initial value in accordance with the received command is set in the monitoring flag. A timing (process check point) for setting the monitoring flag is preset in accordance with the received command.

FIGS. 3 and 4 show examples of typical processing contents in a case wherein the data is encrypted and output, and a plurality of timings for setting the monitoring flag. As a detailed example of data output, a process of encrypting and outputting the data will be described below with reference to FIGS. 3 and 4. Note that in the embodiment, the timing for setting the monitoring flag is also called "process check point".

That is, upon reception of a command from the terminal system 1 for encrypting and outputting the data, first, the control unit 22 sets the initial value of the monitoring flag on the basis of the number of process check points in response to the command (step S12). Note that in the examples shown in FIGS. 3 and 4, the number of the process check points is four. Hence, in the examples shown in FIGS. 3 and 4, for example, "4" is set as the initial value of the monitoring flag.

When the monitoring flag is initialized, the control unit 22 checks a security status as the first process (step S13). This security status checking process is a process of checking an item set as the security status. As this security status checking process, for example, authentication of the terminal system 1 serving as a command transmission source, or authentication of the received command is performed.

When the security status checking process as the first process normally ends, the control unit 22 determines that it is the first process check point. The first process check point is the timing for setting the monitoring flag in correspondence with the first process. When it is determined that it is the first process check point as described above, i.e., when it is determined that the security status checking process as the first process normally ends, the control unit 22 sets the monitoring flag. For example, when the value of the monitoring flag is decremented one by one at the first process check point, the control unit 22 sets the monitoring flag by subtracting one from the current value (initial value) of the monitoring flag.

When the monitoring flag is set at the first process check point, the control unit 22 verifies authenticator data as the second process (step S15). The authenticator data verification process is a process of verifying the validity of the authenticator data. When the authenticator data verification process as the second process normally ends, the control unit 22 determines the end as the second process check point. The second process check point is the timing for setting the monitoring flag in correspondence with the second process.

When it is determined that the end is the second process check point as described above, i.e., when it is determined that the authenticator data verification process as the second process normally ends, the control unit 22 sets the monitoring flag (step S16). For example, when the value of the monitoring flag is decremented one by one at the second process check point, the control unit 22 sets the monitoring flag by subtracting one from the current value of the monitoring flag.

When the monitoring flag is set at the second process check point, the control unit 22 performs an encryption process as the third process (step S17). In the encryption process, the data to be output is encrypted. When the encryption process as the third process normally ends, the control unit 22 determines that the end is the third process check point. The third process check point is the timing for setting the monitoring flag in correspondence with the third process.

When it is determined that the end is the third process check point as described above, i.e., when it is determined that the encryption process as the third process normally ends, the control unit 22 sets the monitoring flag (step S18). For example, when subtracting one from the value of the monitoring flag at the third process check point, the control unit 22 sets the monitoring flag by subtracting one from the current value of the monitoring flag.

When the monitoring flag is set at the third process check point, the control unit 22 processes authenticator data as the fourth process (step S19). The authenticator data process is a process of adding the authenticator data to the encrypted data to be output. When the authenticator data process as the fourth process normally ends, the control unit 22 determines that the end is the fourth process check point. The fourth process check point is the timing for setting the monitoring flag in correspondence with the fourth process.

When it is determined that the end is the fourth process check point as described above, i.e., when it is determined that the authenticator data process as the fourth process normally ends, the control unit 22 sets the monitoring flag (step S20). For example, when subtracting one from the value of the monitoring flag at the fourth process check point, the control unit 22 sets the monitoring flag by subtracting one from the current value of the monitoring flag.

In the examples shown in FIGS. 3 and 4, the processes must be performed prior to data output in the first, second, third, and fourth processes. Therefore, when the monitoring flag is set at the fourth process check point, the control unit 22 determines that the various processes to be performed prior to data output in response to the received read command completely end. When it is determined that the various processes to be performed prior to data output end, the control unit 22 generates mask data (steps S21 and S22).

The mask data is data used to protect the data to be output. In this embodiment, in step S23 (to be described later), a calculation process is performed for the data to be output using the mask data. That is, the above mask data does not change the data to be masked when the monitoring flag is set to a predetermined value, and changes that when the monitoring flag is not the predetermined value.

For example, the mask data may use the value of the monitoring flag. The mask data may also be generated on the basis of the value of the monitoring flag and the random number data (arbitrary data), the value of the monitoring flag and the IC card unique data, or the values of the monitoring flag in past and present processes. In this case, assume that the_mask data is generated on the basis of the value of the monitoring flag and the random number data.

In this case, as a process of generating the mask data, the control unit 22 generates the random number data by the random number generation unit 26 (step S21). When the random number data is generated by the random number generation unit 26, the control unit 22 generates the mask data on the basis of the generated random number data and the value of the monitoring data (step S22). Then, the control unit 22 generates the mask data by performing a predetermined calculation process between the random number data and the value of the monitoring flag. As a detailed example of the mask data generation process, a bit-shift calculation process by the value of the monitoring flag for the generated random number data, and the exclusive OR operation between the calculation result and the random number data are available.

When the mask data is generated, the control unit 22 masks (protects) the data to be output using the generated mask data (step S23). More specifically, the control unit 22 performs a predetermined calculation process between the generated mask data and the data to be output (step S23). That is, in order to protect the data to be output, the control unit 22 performs the calculation process for the data to be output using the mask data. For example, as the calculation process for the data to be output using the mask data, the control unit 22 performs the exclusive OR operation between the mask data and the data to be output. As the calculation process in step S23, OR operation, addition, or shift calculation may be performed for the mask data and the data to be output.

When the data to be output is masked using the mask data, the control unit 22 outputs the data to be output which is masked using the mask data, as a response to the received read command to the terminal system 1 via the communication interface 21 (step S25). Hence, the terminal system 1 obtains the data from the IC card as a response to the transmitted read command.

As a detailed example in steps S22 to S24, a case wherein the exclusive OR operation between the random number data and the data obtained by shifting by the value of the monitoring flag using the random number data is performed in step S22, and the exclusive OR operation between the mask data and the data to be output is performed in step S23 will be described.

In this case, when the value of the monitoring flag is "0", the mask data as the calculation result in step S22 becomes "0" regardless of the value of the random number data. Accordingly, if the mask data is "0", the data to be output is not tampered in the calculation process in step S23. Hence, if the monitoring flag is "0", the mask data also becomes "0". Therefore, in step S24, the data to be output is output as normal data.

In contrast to this, if the value of the monitoring flag is not "0", the mask data as the calculation result in step S22 is not "0". Accordingly, if the mask data is not "0", the data to be output is tampered in the calculation process in the step S23. That is, if the value of the monitoring flag is "0", the mask data is not "0". Therefore, in step S24, abnormal data obtained by tampering the data to be output is output.

As described above, in the IC card according to this embodiment, the monitoring flag which monitors the execution states of the various processes corresponding to the command for outputting the data is set to the initial value which serves as the predetermined value when all the processes normally end. Additionally, the value of the monitoring flag is changed (set) in accordance with the performed processes, the data to be output is masked on the basis of the value of the monitoring flag when the processes prior to data output are completed, and the masked data is output.

As a result, in the IC card, the monitoring flag need not be checked, and the normal data can be prevented from being output when the process is abnormal. For example, when the program malfunctions by a disturbance, and a specific process is skipped, the value of the monitoring flag becomes abnormal. Hence, the output data masked on the basis of the monitoring flag also becomes abnormal. Therefore, in the above-described embodiment, the data in the IC card can be protected, and the IC card with high security can be implemented.

Furthermore, in the above-described IC card, calculations such as the exclusive OR operation, OR operation, addition, and shift calculation based on predetermined rules are performed between the data to be output and the mask data. The calculation result is output as the output data. Accordingly, when the value of the monitoring flag is not a predetermined value, the actually output data is the abnormal data different from the data to be output. As a result, the data in the IC card can be protected.

Furthermore, when all the processes to be monitored by the monitoring flag end, in the IC card, the mask data is generated on the basis of the value of the monitoring flag and the random number data, and the data to be output is masked and output on the basis of the generated mask data. Hence, in the IC card, the data to be output can be masked with randomness. As a result, the correct data cannot be predicted by referring to the masked data (output data), thereby implementing the IC card with high security.

Note that in the IC card, the value of the monitoring flag may be set to the initial value so as to become "0" when all the processes are normally performed, and the value of the monitoring flag may be decremented for each specific process. In this case, when all the processes to be monitored by the monitoring flag normally end, the value of the monitoring flag becomes "0" in the IC card. Therefore, as a mask process, when the value of the monitoring flag is "0", a calculation process is so performed as to prevent the data to be output from changing. As a result, in the IC card, when all the processes normally end, no data changes even if the data to be output is masked, thereby improving the security.

In the IC card, data unique to the IC card may be held in the nonvolatile memory 25 whenever the data is output in step S24, and the mask data may be generated on the basis of the unique data and the value of the monitoring flag in steps S21 to S23. In this case, when all the processes to be monitored by the monitoring flag end, in the IC card, the mask data is generated on the basis of the value of the monitoring flag and the data unique to the IC card. The data to be output is then masked and output on the basis of the generated mask data. Hence, in the IC card, the data to be output can be masked on the basis of the unique data of the IC card, thereby improving the security.

Additionally, in the IC card, the value of the monitoring flag used for masking the output data in all the above-described processes (i.e., whenever the data masked in step S24 is output) may be stored in the nonvolatile memory 25, and the mask data may be generated on the basis of the past and present values of the monitoring flag. In this case, when all the processes to be monitored by the monitoring flag end, in the IC card, the present and past values of the monitoring flag stored in the nonvolatile memory are added. After that, the mask data is generated on the basis of the random number data and the data obtained by shifting by the added value using the random number data. Accordingly, the data to be output is masked and output on the basis of the generated mask data. As a result, since the value of the monitoring flag is saved, the security can be improved even when the program always malfunctions at the same position.

A modification of the above-described process will be described below.

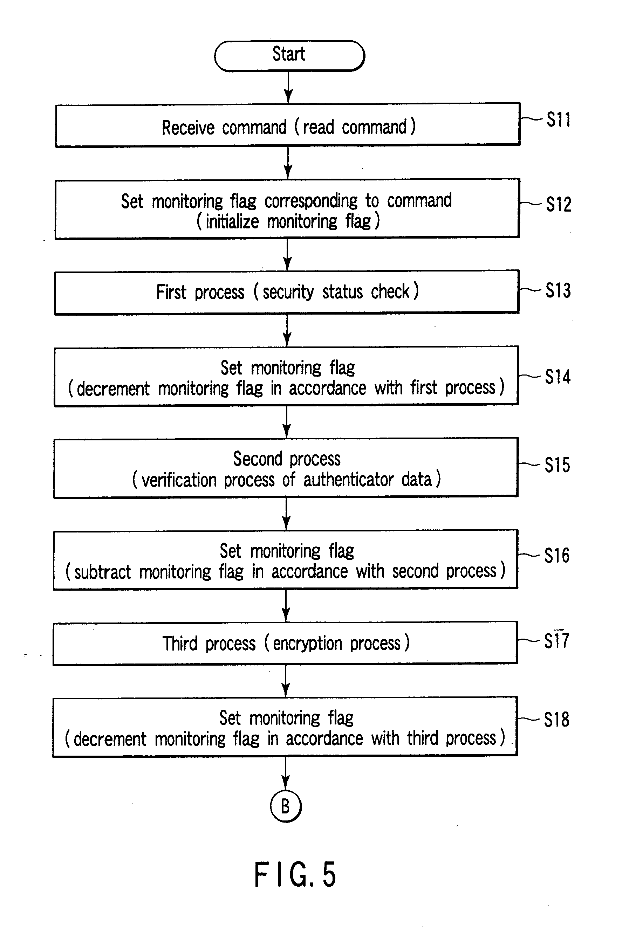

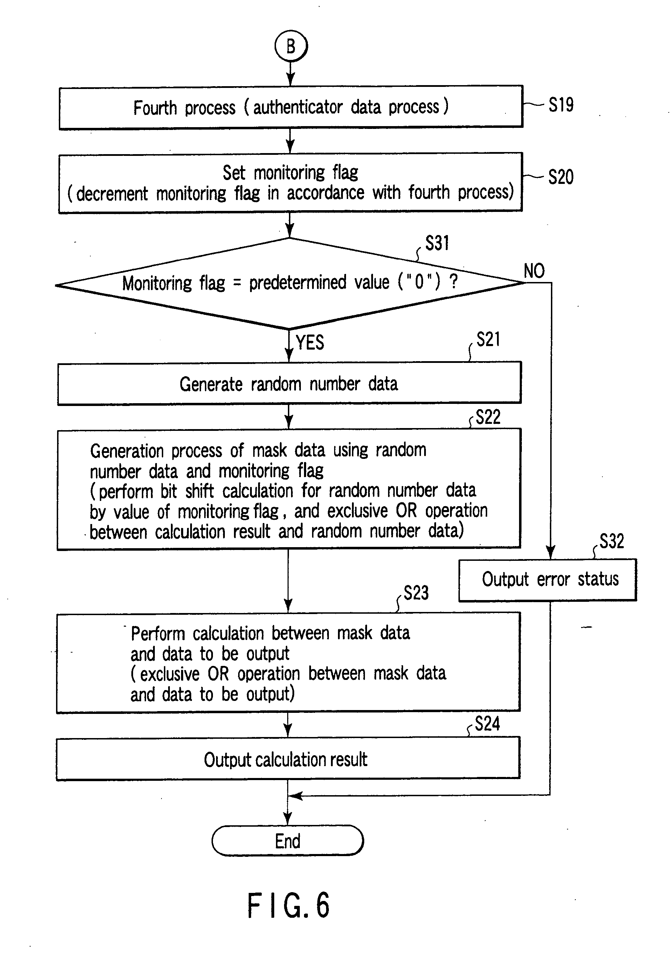

FIGS. 5 and 6 are flowcharts for explaining a process example in the IC card 2.

Note that FIGS. 5 and 6 are flowcharts for explaining the modification of the process shown in FIGS. 3 and 4. Hence, the same reference symbols as in FIGS. 3 and 4 denote the same steps in FIGS. 5 and 6, and a detailed description thereof will be omitted. The flowcharts shown in FIGS. 5 and 6 are obtained by adding steps S31 and S32 to the flowcharts shown in FIGS. 3 and 4.

That is, when it is determined that the various processes (first, second, third, and fourth processes) to be performed prior to data output are completed, the control unit 22 determines whether the value of the monitoring flag is a predetermined value (e.g., "0") (step S31). If it is determined that the value of the monitoring flag is not the predetermined value depending on the determination result, the control unit 22 outputs an error status (step S32), and this process ends. Alternatively, when it is determined that the value of the monitoring flag is the predetermined value depending on the determination result, the control unit 22 advances to step S21.

Therefore, in the modification shown in FIGS. 5 and 6, when it is determined that the value of the monitoring flag is not the predetermined value ("0"), the control unit 22 outputs the error status without outputting the data, and the process corresponding to the read command ends. Alternatively, when it is determined that the value of the monitoring flag is the predetermined value ("0"), the control unit 22 generates the mask data, and outputs the data masked by the generated mask data.

That is, as in the modification, when it is determined that the value of the monitoring flag is not the predetermined value depending on the checking result of the monitoring flag, the error status can be notified without outputting the data. Even when the monitoring flag checking process is skipped, the data to be output can be masked using the mask data based on the value of the monitoring flag.

In other words, when the value of the monitoring flag is not the predetermined value due to a normal error, the IC card can notify that the error has occurred. When the monitoring flag checking process is fraudulently skipped, the data to be output can be tampered and output if the value of the monitoring flag is not the predetermined value.

In the above embodiment, the value of the monitoring flag is set to the initial value so as to become the predetermined value when all the processes corresponding to the command for outputting the data are normally performed. The value of the monitoring flag is set in accordance with the execution states of the various processes corresponding to the command for outputting the data. When the processes prior to data output are completed, the data to be output is masked on the basis of the value of the monitoring flag, and the masked data is output.

As described above, in the embodiment, even when the processing program malfunctions, the data in the IC card can be protected, thereby implementing the IC card with high security.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A portable electronic apparatus (2) **characterized by** comprising:
a setting unit (S12) which sets an initial value of monitoring information which serves as a predetermined value in a state in which all processes corresponding to a command are performed when the command for outputting data is supplied from an external device (1);
a changing unit (S14, S16, S18, S20) which changes the monitoring information whose initial value is set by the setting unit (S12) depending on the performed processes;
a protection unit (S22, S23) which protects data to be output, on the basis of the monitoring information changed by the changing unit (S14, S16, S18, S20) depending on the performed processes; and
an output unit (S24) which outputs the data protected by the projection unit to the external device (1).

2. An apparatus (2) according to claim 1, **characterized by** further comprising
a module (2b) which includes the setting unit (S12), the changing unit (S14, S16, S18, S20), the protection unit (S22, S23), and the output unit (S24), and
a housing (2c) in which the module (2b) is buried.

3. An apparatus (2) according to claim 1 or 2, **characterized in that**
the protection unit (S22, S23) performs a predetermined calculation process for the data to be output, on the basis of the monitoring information changed by the changing unit (S14, S16, S18, S20) depending on the performed processes, and
the output unit (S24) outputs to the external device (1) the data obtained as a result of the calculation process performed by the protection unit (S22, S23).

4. An apparatus (2) according to any one of the preceding claims **characterized in that** the protection unit (S22, S23) protects the data to be output, on the basis of arbitrary data and the monitoring information changed by the changing unit (S14, S16, S18, S20) depending on the performed process.

5. An apparatus (2) according to claim 4, **characterized in that**
the protection unit (S22, S23) performs a predetermined calculation process for the data to be output, on the basis of arbitrary data and the monitoring information changed by the changing unit (S14, S16, S18, S20) depending on the performed process, and
the output unit (S24) outputs to the external device (1) the data obtained as a result of the calculation process performed by the protection unit (S22, S24).

6. An apparatus (2) according to any one of the preceding claims, which further comprises a random number generation unit (26) which generates random number data, and
**characterized in that** the protection unit (S22, S24) protects the data to be output, on the basis of the monitoring information changed by the changing unit (S14, S16, S18, S20) depending on the performed process, and the random number data generated by the random number data generation unit (26).

7. An apparatus (2) according to claim 6, **characterized in that**
the protection unit (S22, S24) performs a predetermined calculation process for the data to be output, on the basis of the monitoring information changed by the changing unit (S14, S16, S18, S20) depending on the performed process, and the random number data generated by the random number data generation unit (26), and
the output unit (S24) outputs to the external device (1) the data obtained as a result of the calculation process performed by the protection unit (S22, S23).

8. An apparatus (2) according to any one of the preceding claims, which further comprises a memory (25) in which data unique to the portable electronic apparatus (2) is stored, and
**characterized in that** the protection unit (S22, S23) protects the data to be output, on the basis of the monitoring information changed by the changing unit (S14, S16, S18, S20) depending on the performed process, and the unique data stored in the memory (25).

9. An apparatus (2) according to claim 8, **characterized in that**
the protection unit (S22, S23) performs a predetermined calculation process for the data to be output, on the basis of the monitoring information changed by the changing unit (S14, S16, S18, S20) depending on the performed process, and the unique data stored in the memory (25), and
the output unit (S24) outputs to the external device (1) the data obtained as a result of the calculation process performed by the protection unit (S22, S23).

10. An apparatus (2) according to any one of the preceding claims, which further comprises a memory (25) which stores the monitoring information used for protecting the data by the protection unit (S22, S23) when the output unit (S24) outputs the data, and
**characterized in that** the protection unit (S22, S23) protects the data to be output, on the basis of the monitoring information changed by the changing unit (S14, S16, S18, S20) depending on the performed process, and the monitoring information stored in the memory (25).

11. An apparatus (2) according to claim 10, **characterized in that**
the protection unit (S22, S23) performs a predetermined calculation process for the data to be output, on the basis of the monitoring information changed by the changing unit (S14, S16, S18, S20) depending on the performed process, and the monitoring information stored in the memory (25), and
the output unit (S24) outputs to the external device (1) the data obtained as a result of the calculation process performed by the protection unit (S22, S23).

12. A data output method for a portable electronic apparatus (2) **characterized by** comprising:
setting (S12) an initial value of monitoring information which serves as a predetermined value in a state in which all processes corresponding to a command are performed when the command for outputting data is supplied from an external device (1);
changing (S14, S16, S18, S20) the monitoring information whose initial value is set depending on the performed processes;
protecting (S22, S23) data to be output, on the basis of the monitoring information changed depending on the performed processes; and
outputting (S24) the protected data to the external device (1).

13. A method according to claim 12, **characterized in that** protecting (S22, S23) the data to be output comprises protecting the data to be output, on the basis of arbitrary data and the monitoring information changed depending on the performed process.

14. A method according to claim 12, or 13 which further comprises generating (S21) random number data, and
**characterized in that** protecting (S22, S23) the data to be output comprises protecting the data to be output, on the basis of the monitoring information changed depending on the performed process, and the generated random number data.

15. A method according to any one of claims 12 to 14, **characterized in that**
protecting (S22, S23) the data to be output comprises protecting the data to be output, on the basis of the monitoring information changed depending on the performed process, and the unique data unique to the portable electronic apparatus.

16. A method according to any one of claims 12 to 15, which further comprises storing the monitoring information used for protecting the data in memory (25) when the data is output, and
**characterized in that** protecting the data to be output comprises protecting the data to be output, on the basis of the monitoring information changed depending on the performed process, and the monitoring information stored in the memory (25).
